**Europäisches Patentamt**

**European Patent Office**

**Office européen des brevets**

(11) Numéro de publication: **0 117 206**

**A1**

(12) **DEMANDE DE BREVET EUROPEEN**

(21) Numéro de dépôt: **84400325.1**

(22) Date de dépôt: **16.02.84**

(51) Int. Cl.³: **F 04 B 49/00**
**F 04 C 15/04, F 15 B 9/10**

(30) Priorité: **17.02.83 FR 8302575**
**17.06.83 FR 8310026**

(43) Date de publication de la demande:
**29.08.84 Bulletin 84/35**

(84) Etats contractants désignés:
**BE CH DE FR GB IT LI SE**

(71) Demandeur: **COMPAGNIE PARISIENNE D'OUTILLAGE A AIR COMPRIME Société anonyme dite:**
**Zone Industrielle des Fourmis**
**F-74130 Bonneville(FR)**

(72) Inventeur: **Bouveret, Claude**
**409, square Jacques Prévert**
**F-91000 Evry(FR)**

(74) Mandataire: **Weinmiller, Jürgen et al,**
**Zeppelinstrasse 63**
**D-8000 München 80(DE)**

(54) **Machine hydraulique.**

(57) Elle a pour objet une machine hydraulique reversible (servopompe ou servomoteur) du type dans lequel un piston (302) mobile en translation déplace un barillet d'une pompe à piston ou un anneau (304) d'une pompe à palettes (305), caractérisée en ce qu'elle comprend des moyens (301) pour assurer une translation du piston d'amplitude proportionnelle à la valeur angulaire de rotation de l'arbre d'un ensemble moteur numérique (350).

Application à la robotique.

FIG. 2

Croydon Printing Company Ltd.

Machine hydraulique

La présente invention concerne une machine hydraulique (servomoteur ou servopompe.

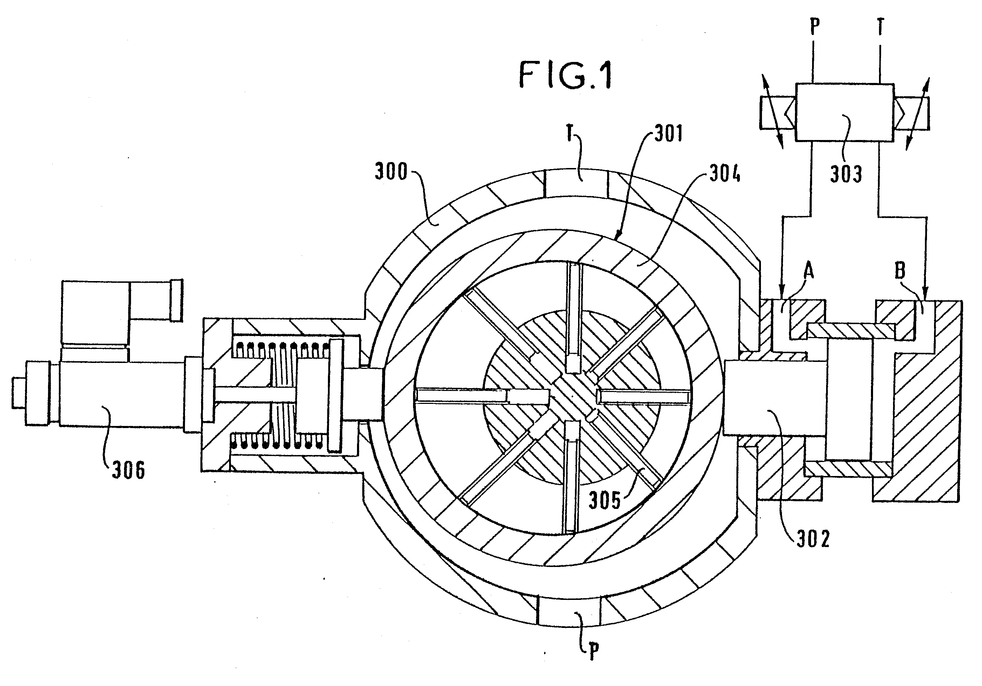

Un servopompe de type connu est représenté dans la figure 1. Elle comprend un corps 300 dans lequel est disposé une pompe 301 à palettes 305.

Un piston 302 commandé par une servovalve 303 permet l'excentration de l'anneau 304 de la pompe à palettes.

Un contrôleur de position 306 rebouclé sur la servovalve est obligatoire, mais rend l'appareil encombrant et fragile.

L'invention a enfin pour objet une machine hydraulique réversible (servopompe ou servomoteur) du type dans lequel un piston mobile en translation déplace un barillet d'une pompe à piston ou un anneau d'une pompe à palettes, caractérisée en ce qu'elle comprend des moyens pour assurer une translation du piston d'amplitude proportionnelle à la valeur angulaire de rotation de l'arbre d'un ensemble moteur numérique.

Un but de l'invention est de réaliser une machine hydraulique robuste, fiable et peu encombrante.

- La figure 1 représente une servomachine hydraulique commandée selon l'art connu.

- Les figures 2 et 3 représentent une servomachine hydraulique commandée selon deux modes de réalisation de l'invention.

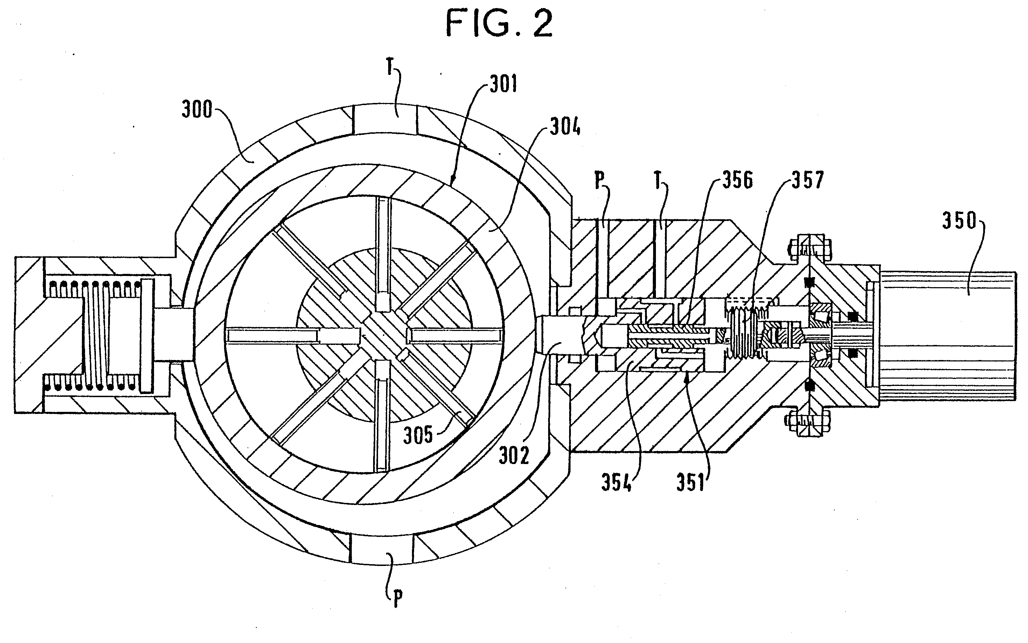

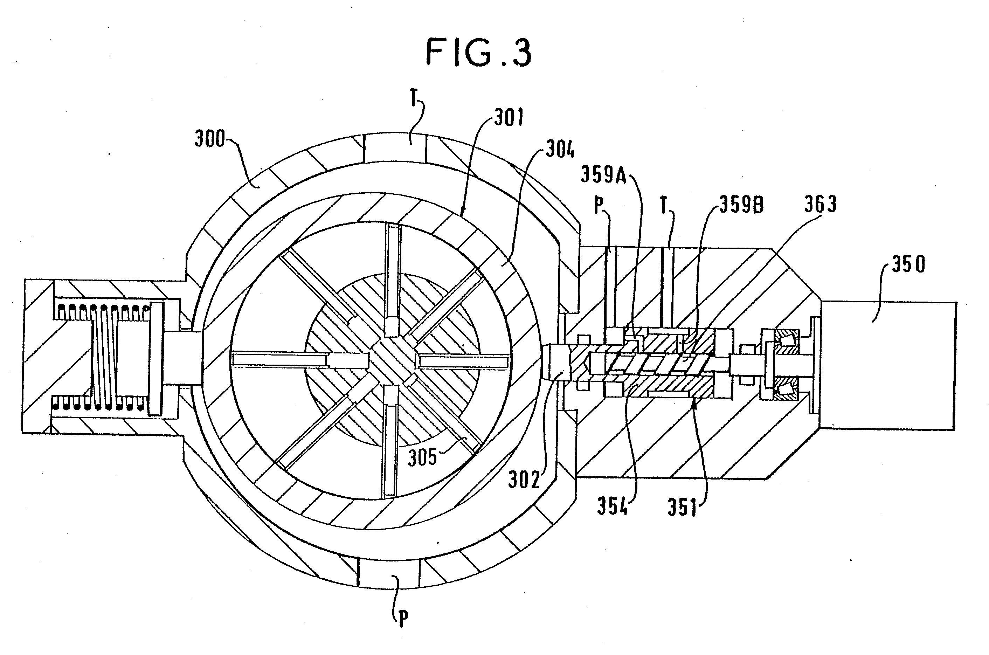

Les figures 2 et 3 représentent deux modes de réalisation d'une servopompe (ou servomoteur) selon l'invention.

Le piston 302 est mu en translation par un moteur numérique 350 ; il est lié au micro-piston 354 d'un micro-pilote hydraulique 351 :

- figure 2: le micro-piston hydraulique 354 comporte un micro-tiroir 356 à vis 357 l'accouplement au moteur est tel qu'il laisse le micro-tiroir libre en translation, mais assujetti en rotation.

- figure 3: le micro-piston 354 comporte une vis hydraulique 363 reliée à l'arbre du moteur. Les filets de la vis ouvrent et ferment, selon son sens de rotation, des canaux pratiqués 359A, 359B dans le micro-piston et reliés respectivement à une source P de pression hydraulique et à la pression atmosphérique T d'une bâche.

Les servopompes et servomoteurs décrits ci-dessus présentent les avantages ci-après :

- précision du débit ou du couple,

- fiabilité et fidélité,

- prix de revient modéré,

- robustesse,

- simplicité de commande

- pas de risque de bouchage d'orifices.

Les principes ci-dessus s'appliquent à une servomachine hydraulique dans laquelle le piston 302 incline le barillet d'une pompe à piston.

REVENDICATIONS

1/ Machine hydraulique reversible (servopompe ou servomoteur) du type dans lequel un piston (302) mobile en translation déplace un barillet d'une pompe à piston ou un anneau (304) d'une pompe à palettes (305), caractérisée en ce qu'elle comprend des moyens (301) pour assurer une translation du piston d'amplitude proportionnelle à la valeur angulaire de rotation de l'arbre d'un ensemble moteur numérique (350).

2/ Machine selon la revendication 1, caractérisée en ce que l'ensemble moteur numérique (350) est choisi parmi les moteurs pas à pas et les moteurs à courant continu associés à un codeur.

3/ Machine selon l'une des revendications 1 et 2, caractérisée en ce que ledit piston (302) est solidaire en translation d'un piston (354) d'un micro-pilote hydraulique (351) qui comprend en outre un micro-tiroir (356) coulissant à l'intérieur dudit piston, ledit micro-tiroir possédant des arêtes de pilotage, ledit micro-tiroir étant lié à l'arbre de l'ensemble moteur (350) de manière à être entraîné en rotation, mais rester libre en translation, ledit micro-tiroir possédant une tige filetée (357) se vissant dans une partie fixe du micro-pilote de manière à se déplacer en translation lorsqu'il est entraîné en rotation.

4/ Machine selon l'une des revendications 1 et 2, caractérisée en ce que le piston (302) est solidaire d'un piston (354) d'un micro-pilote (351) hydraulique, ledit micro-pilote comportant une vis de commande (363) assurant l'alimentation hydraulique du micro-pilote et coulissant dans une cavité dudit piston, ladite vis étant liée en rotation avec l'arbre de l'ensemble moteur numérique (350).

# FIG.1

FIG. 2

# FIG.3

0117206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-2 969 646 (MILLER & RIJNDERS) <br> * Colonne 1, ligne 69 - colonne 2, ligne 68; colonne 3, lignes 9-58; figures 1,1A * | 1-3 | F 04 B 49/00 <br> F 04 C 15/04 <br> F 15 B 9/10 |
| | --- | | |
| X | FR-A-1 198 752 (VEB CENTEX) <br> * Page 2, colonne de gauche, alinéa 3 - page 3, colonne de droite, alinéa 1; figures 1-3 * | 1-3 | |
| | --- | | |
| A | DE-A-1 650 521 (REXROTH LOHRER) <br> * Page 6, ligne 1 - page 8, alinéa 2; figures 1-3 * | 4 | |
| | ----- | | |

**DOMAINES TECHNIQUES RECHERCHES (Int. Cl. ³)**

F 04 B
F 04 C
F 15 C

Le présent rapport de recherche a été établi pour toutes les revendications

| Lieu de la recherche | Date d'achèvement de la recherche | Examinateur |
|---|---|---|
| LA HAYE | 27-04-1984 | VON ARX H.P. |